# FASCICULE DE BREVET EUROPEEN

(11) **EP 3 143 346 B1**
(45) Date de publication et mention de la délivrance du brevet: **02.05.2018**
(21) Numéro de dépôt: 15707681.1
(22) Date de dépôt: 05.03.2015
(51) Int. Cl.: F24S 20/20, F24S 10/70

(54) **TOUR SOLAIRE À CONCENTRATION AVEC RÉCEPTEUR EXTERNE**
KONZENTRIRENDER SOLARTURM MIT EXTERNEM EMPFÄNGER
CONCENTRATING SOLAR TOWER WITH EXTERNAL RECEIVER

(30) Priorité: 14.05.2014 BE 201400358
(43) Date de publication de la demande: 22.03.2017
(73) Titulaire: Cockerill Maintenance & Ingénierie S.A., 4100 Seraing (BE)
(72) Inventeur: DETHIER, Alfred, B-4140 Sprimont (BE)
(74) Mandataire: Pronovem
(86) Numéro de dépôt international: PCT/EP2015/054638
(87) Numéro de publication internationale: WO 2015/172906

(56) Documents cités:
- EP-A2- 0 106 688
- EP-A2- 1 243 872
- WO-A1-2010/048578
- WO-A2-2013/019670
- US-A1- 2010 199 980
- US-A1- 2012 312 296

## Description

### Objet de l'invention

La présente invention se rapporte au domaine technique des centrales solaires thermodynamiques à concentration (en anglais CSP, pour *Concentrating Solar Power Plant*) et plus particulièrement les centrales solaires à tour.

### Etat de la technique

Dans une centrale solaire à concentration du type « à tour », le rayonnement solaire est réfléchi par une série de miroirs, dit héliostats, vers un récepteur solaire central situé sur une tour, qui transfère l'énergie du rayonnement solaire à un fluide caloporteur qui va s'échauffer et qui pourra être utilisé pour la production d'électricité.

Les héliostats sont pourvus de deux mécanismes de rotation permettant de suivre le soleil et de toujours renvoyer le flux solaire vers un point donné, quelle que soit l'heure du jour et la saison en cours.

Le récepteur solaire est installé au sommet d'une tour afin de recevoir le rayonnement solaire de tous les héliostats sans qu'un héliostat ne gêne la réflexion du flux d'un héliostat voisin.

Le fluide chaud généré dans le récepteur solaire peut par exemple être de la vapeur à haute pression et haute température générée à partir d'eau d'alimentation. La vapeur peut alors être utilisée directement dans une turbine à vapeur entraînant un générateur d'électricité.

Le fluide chaud peut aussi être un mélange de sels servant de fluide calorifique pouvant être stocké au sol en grande quantité et utilisé parallèlement à la production de vapeur et la génération de puissance électrique. On peut découpler de ce fait la captation d'énergie solaire et la production d'électricité.

Le récepteur solaire installé au sommet de la tour peut être du type à cavité ou externe. Dans le premier cas, les cavités sont garnies intérieurement de panneaux de tubes, captant les rayons solaires et l'effet de la cavité est de réduire les pertes par rayonnement. Dans le cas du type externe, les panneaux de tubes captant le rayonnement solaire sont installés à l'extérieur et tout autour de la tour. Les pertes sont légèrement supérieures par rapport au système à cavités, mais il y est plus facile de concentrer le rayonnement solaire, le flux thermique moyen étant nettement supérieur et la surface des panneaux étant fortement réduite pour une même puissance.

Dans la solution extérieure, les panneaux plans sont juxtaposés pour former un prisme droit à base polygonale régulière. Suivant les puissances installées, la base polygonale peut avoir un nombre variable de faces, de 4 à 32 par exemple.

La pratique courante est de fixer chacun des panneaux à une structure fixe. Chacun des panneaux peut alors se dilater librement sous l'effet de l'augmentation de température consécutive à la captation de l'énergie solaire.

Le document US 2012/312296 divulgue un chauffe-eau solaire comportant un support de chaudière définissant un axe le long d'une direction intérieur-extérieur. Une tige de suspension ou bielle verticale est montée de manière rotative sur le support de chaudière. Un étrier est monté de manière rotative sur la tige de suspension et un panneau de chauffe-eau solaire est monté sur l'étrier. Le panneau de la chaudière solaire définit un axe longitudinal qui est sensiblement perpendiculaire à l'axe du support de la chaudière. La tige de suspension relie le support de la chaudière à l'étrier pour supporter le poids du panneau de la chaudière solaire à partir du support de la chaudière. La tige de suspension et l'étrier sont configurés et adaptés pour maintenir une orientation sensiblement constante de l'étrier pendant le mouvement vers l'intérieur et l'extérieur de l'étrier par rapport au support de la chaudière. En effet, selon une forme d'exécution représentée, il y a deux bielles verticales parallèles entre elles qui forment avec le support de chaudière et l'étrier un lien parallélogramme. Les bielles ont une fonction de support du poids du panneau. Celui-ci se déforme sous l'effet de la dilatation ou de la contraction thermique du panneau solaire, mais le déplacement vers le haut de l'étrier sous l'effet de la rotation des bielles est négligeable. Il s'ensuit que le panneau solaire se déplace pratiquement parallèlement à lui-même. Les panneaux solaires ne sont pas reliés entre eux. Les efforts de vent sont repris par un amortisseur reliant l'étrier à la structure. Il n'est pas mentionné que les panneaux solaires peuvent être reliés entre eux.

Le document EP 1 243 872 divulgue un collecteur solaire avec une pluralité de corps absorbants qui absorbent le rayonnement solaire. Ces corps absorbants sont poreux et permettent le passage d'air aspiré. La structure porteuse des récepteurs solaires est formée de modules qui présentent une paroi avant, une paroi arrière, des parois latérales ainsi qu'une cavité. Des tubes traversent chaque module, ces tubes acheminant l'air chaud dans un collecteur. De l'air frais circule à contrecourant au travers d'entrées d'air frais dans la cavité. L'air frais circule autour des corps absorbeurs. De par leur refroidissement, les modules peuvent être en acier, sans courir le risque de surchauffe. Le récepteur solaire est stable et ne nécessite pas de dispositif d'arrêt dans l'enceinte d'air chaud. Les différents modules sont montés adjacents avec des éléments de liaison, de manière à pouvoir supporter sans tension la dilatation thermique. Aussi, les côtés adjacents des modules ne se touchent pas sur l'entièreté de leur surface et des espaces en forme de coin sont prévus à cet effet. De plus, les différents modules montés verticalement sont reliés par leur partie supérieure à la paroi interne par une liaison articulée, ce qui permet la dilatation dans la direction verticale.

Le document WO 2013/019670 décrit un récepteur solaire modulaire, ayant de multiples panneaux de tubes dans une configuration rectangulaire, carrée, polygonale ou circulaire et conçu pour une utilisation avec du sel fondu ou un autre fluide de transfert de chaleur. Le fluide de transfert de chaleur s'écoule selon un chemin vertical en serpentin à travers les côtés (facettes) du récepteur solaire. Le récepteur solaire peut être assemblé en magasin et peut être utilisé avec une tour de support pour former un système d'alimentation solaire.

Le document WO 2010/048578 divulgue un échangeur de chaleur à récepteur solaire assemblé en magasin ayant un agencement de surfaces de transfert de chaleur et un séparateur vertical vapeur/eau interconnecté structurellement et au niveau des fluides à celui-ci. Une structure de support verticale est prévue pour soutenir le séparateur vertical et les surfaces de transfert de chaleur. La structure de support verticale est soutenue par le bas, tandis que le séparateur vertical vapeur/eau et les surfaces de transfert de chaleur de l'échangeur de chaleur sont soutenues par le haut à partir de la structure de support verticale. La structure de support verticale fournit un support structurel et une rigidité pour l'échangeur de chaleur et un moyen par lequel l'échangeur de chaleur peut être saisi et soulevé pour être placé à un endroit souhaité.

Dans ces deux dernières installations, des nervures ou poutres de renfort horizontales sont attachées aux panneaux de tubes solaires. Tous les panneaux sont soutenus par le haut et suspendus à la structure de support interne au récepteur. Chaque panneau de tubes comporte deux plaques d'interconnexion. Chaque plaque est reliée via deux barres pivotantes à leurs extrémités au moyen de goupilles à une patte qui est attachée à un support de flexion lui-même attaché via de l'acier structurel aux colonnes comprenant la structure de support verticale du récepteur. Les barres pivotantes permettent une certaine rotation des panneaux solaires et donc permettent de reprendre la dilatation thermique moyenne des panneaux supportés. Ce système donne une stabilité horizontale aux panneaux de tubes tout en permettant aux tubes une extension verticale libre et indépendante, avec réduction des tensions sur les tubes. Ici aussi, les panneaux de tubes adjacents, sur chaque face et à chaque niveau (haut/bas) sont séparés latéralement (horizontalement) les uns des autres, ce qui permet une dilatation différentielle des panneaux de tubes, sans tensions.

Le document EP 0 106 688 divulgue un récepteur pour recevoir l'énergie de rayonnement solaire, caractérisé par une pluralité de panneaux de tubes générateurs de vapeur aptes à recevoir un flux de liquide à chauffer et à produire de la vapeur, et une pluralité de panneaux de tubes de surchauffe aptes à recevoir un flux de vapeur à surchauffer, les panneaux des tubes générateurs de vapeur et les panneaux de tubes de surchauffe étant disposés dans une relation côte-à-côte pour recevoir l'énergie de rayonnement solaire, et les panneaux des tubes de surchauffe étant intercalés avec les panneaux des tubes générateurs de vapeur selon une séquence d'au moins douze panneaux de telle sorte que chaque séquence de quatre panneaux parmi au moins douze panneaux comprend au moins un panneau de tubes de surchauffe et au moins un panneau de tubes générateurs de vapeur. Le problème provient ici du fait que les panneaux de tubes surchauffeurs subissent une dilatation longitudinale beaucoup plus importante que les panneaux de tubes générateurs de vapeur. De manière similaire au cas précédent, les panneaux de tubes surchauffeurs sont connectés par des bielles à des nervures de renfort horizontales. Ce système permet le mouvement vertical des panneaux de tubes surchauffeurs par rapport aux nervures horizontales et donc par rapport aux panneaux de tubes générateurs de vapeur.

L'état de la technique ne résout pas le problème de la dilatation thermique dans un récepteur solaire externe où les panneaux constituent un prisme à section polygonale, c'est-à-dire où les panneaux adjacents sont connectés entre eux latéralement.

### Buts de l'invention

La présente invention vise à fournir une solution qui permettre de reprendre la dilatation latérale des panneaux dans un récepteur externe prismatique droit à section polygonale régulière, lorsque les panneaux sont connectés entre eux deux à deux par un côté adjacent.

### Principaux éléments caractéristiques de l'invention

Un premier aspect de la présente invention se rapporte à un récepteur solaire externe cylindrique ou prismatique droit, à section polygonale régulière, pour centrale solaire thermodynamique à concentration de type à tour et champ d'héliostats, comprenant une structure interne et une pluralité de panneaux à tubes échangeurs de chaleur contenant un fluide caloporteur apte à l'absorption de l'énergie du rayonnement solaire, lesdits panneaux, constituant une portion de surface cylindrique ou une face prismatique verticale dudit récepteur solaire selon le cas, étant disposés verticalement et connectés deux à deux par une liaison articulée le long d'un côté adjacent, caractérisé en ce que chaque panneau à tubes échangeurs de chaleur est connecté à au moins un élément de support intérieur, d'axe sensiblement perpendiculaire au panneau, cet élément de support intérieur étant par ailleurs connecté de manière rotative à un élément de support appartenant à la structure interne précitée au moyen d'au moins deux bielles parallèles, sensiblement horizontales, articulées respectivement au niveau d'une première extrémité sur l'élément de support intérieur et au niveau d'une seconde extrémité sur l'élément de support de la structure interne respectivement, de manière telle que, sous l'effet de la dilatation ou de la contraction thermique des panneaux à tubes échangeurs, chacun de ces derniers se déplace sensiblement parallèlement à lui-même et sans déformation de sa surface, et de manière telle que la section polygonale ou circulaire du récepteur subisse alors une transformation homothétique.

Selon des modes d'exécution préférés de l'invention, le récepteur solaire externe comprend en outre au moins une des caractéristiques suivantes :
- l'élément de support intérieur comprend une tige, une plaque ou un étrier ;
- le fluide caloporteur comprend de l'eau liquide et/ou sous forme de vapeur ;
- le fluide caloporteur comprend un mélange de sels fondus ;

Un second aspect de la présente invention se rapporte à une centrale solaire thermodynamique à concentration, du type à tour, comprenant un récepteur solaire externe comme décrit ci-dessus.

### Brève description des figures

La figure 1 représente une vue schématique en plan d'un récepteur solaire externe à section hexagonale, monté sur une tour solaire à concentration selon la présente invention.
La figure 2 représente une vue en perspective d'un exemple de tour solaire à concentration comprenant un récepteur solaire externe à 16 faces selon la présente invention.

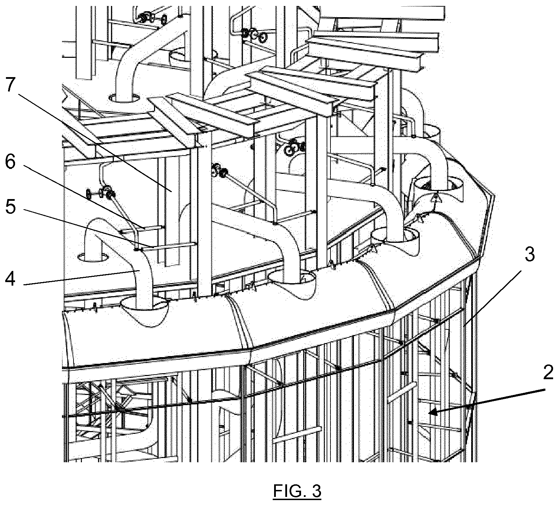

La figure 3 représente une vue de détail de la tour solaire de la figure 2, montrant les caractéristiques de l'invention.

### Description d'une forme d'exécution préférée de l'invention

La solution proposée dans le cadre de la présente invention consiste à :
- relier tous les panneaux entre eux et
- contraindre chaque panneau à se déplacer parallèlement à lui-même, grâce à un système de bielles, c'est-à-dire de tiges articulées à chacune de leurs deux extrémités.

Le prisme à section polygonale peut ainsi se dilater tout à fait librement sous l'effet de l'augmentation de la température et inversement se contracter librement si la température diminue. Les bielles permettent de reprendre les efforts de vent ou de séisme éventuel, en maintenant la forme du prisme.

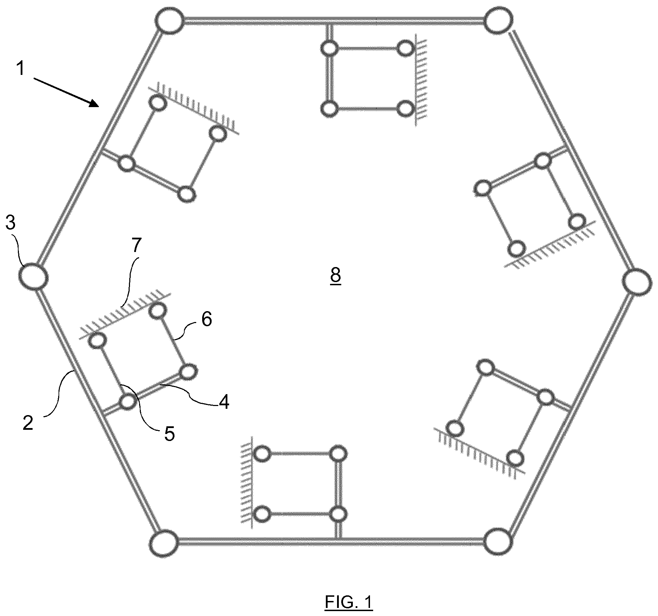

La figure 1 représente schématiquement un récepteur externe 1 pour centrale solaire à tour 8, sous forme d'un prisme droit régulier à six faces 2 faisant office de panneaux absorbants, soit à section hexagonale, dans le cas d'espèce pour les besoins de l'illustration, sans que le nombre de faces soit limitatif. Les panneaux 2 sont reliés entre eux deux à deux par une liaison articulée 3 et chaque panneau 2 peut se mouvoir parallèlement à lui-même grâce à une attache 4 perpendiculaire au panneau 2. L'attache 4, se présentant par exemple sous forme de tige, de plaque ou d'étrier, est solidaire de deux bielles 5, 6 parallèles entre elles et articulées d'une part à une structure de support fixe ou charpente 7, interne à la tour 8 et d'autre part à l'attache 4.

Les bielles 5, 6 sensiblement horizontales et parallèles entre elles sont connectées à un panneau 2 et obligent celui-ci à se déplacer quasi parallèlement à lui-même, sur un cercle de rayon égal à la longueur de la bielle. Mais les déplacements dus à la dilatation thermique des panneaux sont faibles, eu égard à la largeur des panneaux, de l'ordre de 1 à 1,5 %. On peut ainsi dire que chaque panneau se déplace parallèlement à lui-même dans une direction normale à lui-même. Les bielles 5, 6, par leur position horizontale, n'ont pas de fonction de support du poids du panneau solaire comme dans US 2012/312296.

L'effort du vent agissant sur un ou plusieurs panneaux 2 est distribué sur l'ensemble des bielles 5, 6, suivant une distribution mathématique définie.

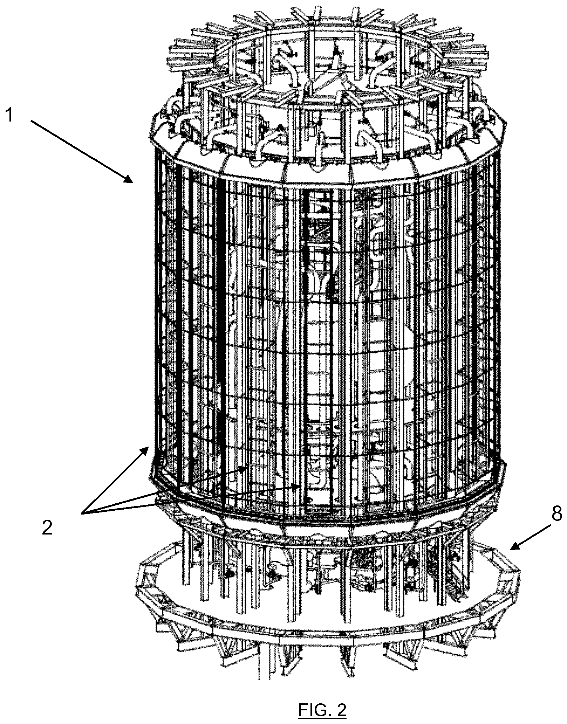

La figure 2 montre un exemple réaliste de récepteur à sels fondus pour centrale solaire à tour, sous forme d'un prisme polygonal régulier à 16 faces, de diamètre égal à 18 m. La hauteur des panneaux est de 18,4 m. Un ensemble de bielles et liaisons est installé en partie basse des panneaux et en partie haute, reprenant l'ensemble des panneaux. La puissance captée est de 700 MW.

### Symboles de référence

- 1: récepteur externe
- 2: panneau absorbant
- 3: liaison articulée
- 4: attache de panneau
- 5: bielle
- 6: bielle
- 7: charpente
- 8: tour solaire

## Revendications

1. Récepteur solaire externe cylindrique ou prismatique droit, à section polygonale régulière (1), pour centrale solaire thermodynamique à concentration de type à tour (8) et champ d'héliostats, comprenant une structure interne et une pluralité de panneaux (2) à tubes échangeurs de chaleur contenant un fluide caloporteur apte à l'absorption de l'énergie du rayonnement solaire, lesdits panneaux (2), constituant une portion de surface cylindrique ou une face prismatique verticale dudit récepteur solaire selon le cas, étant disposés verticalement, où chaque panneau (2) à tubes échangeurs de chaleur est connecté à au moins un élément de support intérieur (4), d'axe sensiblement perpendiculaire au panneau (2), cet élément de support intérieur (4) étant par ailleurs connecté de manière rotative à un élément de support (7) appartenant à la structure interne précitée au moyen d'au moins deux bielles parallèles (5, 6), articulées respectivement au niveau d'une première extrémité sur l'élément de support intérieur (4) et au niveau d'une seconde extrémité sur l'élément de support (7) de la structure interne respectivement, **caractérisé en ce que** lesdits panneaux (2) sont connectés deux à deux par une liaison articulé le long d'un coté vertical adjacent et les bielles (5, 6) sont sensiblement horizontales, de manière telle que, sous l'effet de la dilatation ou de la contraction thermique des panneaux (2) à tubes échangeurs, chacun de ces derniers se déplace sensiblement parallèlement à lui-même et sans déformation de sa surface, et de manière telle que la section polygonale ou circulaire du récepteur (1) subisse alors une transformation homothétique.

2. Récepteur solaire externe selon la revendication 1, **caractérisé en ce que** l'élément de support intérieur (4) comprend une tige, une plaque ou un étrier.

3. Récepteur solaire externe selon la revendication 1, **caractérisé en ce que** le fluide caloporteur comprend de l'eau liquide et/ou sous forme de vapeur.

4. Récepteur solaire externe selon la revendication 1, **caractérisé en ce que** le fluide caloporteur comprend un mélange de sels fondus.

5. Centrale solaire thermodynamique à concentration, du type à tour (8), comprenant un récepteur solaire externe (1) selon l'une
quelconque des revendications précédentes.

## Patentansprüche

1. Externer gerader zylindrischer oder prismatischer Solarempfänger mit regelmäßigem polygonalem Querschnitt (1) für thermodynamische Konzentrations- und Heliostatenfeld-Solarzentrale des Turmtyps (8), eine innere Struktur und eine Vielzahl von Paneelen (2) mit Wärmetauscherröhren umfassend, enthaltend ein Wärmeträgerfluid, das zur Absorption der Energie der Sonnenstrahlung imstande ist, wobei die Paneele (2), die je nach Fall einen zylindrischen Oberflächenabschnitt oder eine vertikale prismatische Fläche des Solarempfängers bilden, vertikal angeordnet sind, wobei jedes Paneel (2) mit Wärmetauscherröhren mit mindestens einem inneren Halteelement (4) mit einer zum Paneel (2) etwa senkrechten Achse verbunden ist, wobei dieses innere Halteelement (4) mit Hilfe von mindestens zwei parallelen Stangen (5, 6), die jeweils im Bereich eines ersten Endes auf dem inneren Halteelement (4) und im Bereich eines zweiten Endes auf dem Halteelement (7) der inneren Struktur jeweils angelenkt sind, ferner mit einem Halteelement (7) rotierend verbunden ist, das zu der vorgenannten inneren Struktur gehört, **dadurch gekennzeichnet, dass** die Paneele (2) paarweise mittels einer Gelenkverbindung entlang einer benachbarten vertikalen Seite verbunden sind und die Stangen (5, 6) etwa horizontal sind, so dass sich unter der Wirkung der thermischen Ausdehnung oder Kontraktion der Paneele (2) mit Tauscherröhren jedes dieser Letztgenannten parallel zu sich selbst und ohne Verformung seiner Oberfläche derart verlagert, dass der polygonale oder runde Querschnitt des Empfängers (1) dann eine homothetische Transformation erfährt.

2. Externer Solarempfänger nach Anspruch 1, **dadurch gekennzeichnet, dass** das innere Halteelement (4) eine Stange, eine Platte oder einen Bügel umfasst.

3. Externer Solarempfänger nach Anspruch 1, **dadurch gekennzeichnet, dass** das Wärmeträgerfluid flüssiges Wasser und/oder in Form von Dampf umfasst.

4. Externer Solarempfänger nach Anspruch 1, **dadurch gekennzeichnet, dass** das Wärmeträgerfluid ein Gemisch geschmolzener Salze umfasst.

5. Thermodynamische Konzentrations-Solarzentrale des Turmtyps (8), umfassend einen externen Solarempfänger (1) nach einem der vorangehenden Ansprüche.

## Claims

1. A straight cylindrical or prismatic external solar receiver, with a regular polygonal section (1), for a concentrating thermodynamic solar power plant of the tower (8) and heliostat field type, comprising an internal structure and a plurality of panels (2) of heat exchange tubes containing a heat-transfer fluid that is suitable for absorbing the energy from solar radiation, said panels (2), making up a cylindrical surface portion or a vertical prismatic face of said solar receiver depending on the case, being vertically positioned, where each heat exchange tube panel (2) is connected to at least one internal support element (4), with an axis that is substantially perpendicular to the panel (2), that internal support element (4) being further rotatably connected to a support element (7) belonging to the aforementioned internal structure using at least two parallel connecting rods (5, 6), respectively articulated at a first end on the internal support element (4) and at a second end on the support element (7) of the internal structure, respectively, **characterized in that** said panels (2) are connected in pairs by an articulated link along an adjacent vertical side and **in that** the connecting rods (5, 6) are substantially horizontal, such that, under the effect of thermal expansion or contraction of the heat exchange tube panels (2), each of the latter moves substantially parallel to itself and without deformation of its surface, and such that the polygonal or circular section of the receiver (1) then undergoes a homothetic transformation.

2. The external solar receiver according to Claim 1, **characterized in that** the internal support element (4) comprises a rod, a plate or a bracket.

3. The external solar receiver according to Claim 1, **characterized in that** the heat-transfer fluid comprises liquid water and/or water as steam.

4. The external solar receiver according to Claim 1, **characterized in that** the heat-transfer fluid comprises a mixture of fused salts.

5. A concentrating thermodynamic solar power plant, of the tower (8) type, comprising an external solar receiver (1) according to any one of the preceding claims.
